# EUROPÄISCHE PATENTSCHRIFT

(11) **EP 2 525 052 B1**
(45) Veröffentlichungstag und Bekanntmachung des Hinweises auf die Patenterteilung: **03.05.2017**
(21) Anmeldenummer: 12167881.7
(22) Anmeldetag: 14.05.2012
(51) Int. Cl.: F01K 3/10, F01K 15/02, F01N 5/02, F02G 5/02, F28D 20/02, F01K 23/06, F28D 20/00, F28D 21/00

(54) **Abwärmenutzungsvorrichtung**
Heat recovery unit
Unité de récupération de chaleur

(30) Priorität: 18.05.2011 DE 102011076054
(43) Veröffentlichungstag der Anmeldung: 21.11.2012
(73) Patentinhaber: Eberspächer Exhaust Technology GmbH & Co. KG, 66539 Neunkirchen (DE)
(72) Erfinder: Rusche, Ulrich, 59457 Werl-Büderich (DE)
(74) Vertreter: BRP Renaud & Partner mbB Rechtsanwälte Patentanwälte Steuerberater

(56) Entgegenhaltungen:
- EP-A1- 2 660 432
- DE-A1-102009 035 522
- JP-A- 2005 016 326
- JP-A- 2006 063 816
- JP-A- 2007 032 561
- JP-A- 2010 116 911

## Beschreibung

Die vorliegende Erfindung betrifft eine Abwärmenutzungsvorrichtung für eine Brennkraftmaschine, insbesondere eines Kraftfahrzeugs, mit den Merkmalen des Oberbegriffs des Anspruchs 1. Die Erfindung betrifft außerdem ein zugehöriges Betriebsverfahren.

Aus der DE 10 2007 033 611 A1 ist eine Abwärmenutzungsvorrichtung bekannt. Diese umfasst einen Abwärmenutzungskreis, in dem ein Arbeitsmedium zirkuliert. In der Fließrichtung des Arbeitsmediums sind im Abwärmnutzungskreis hintereinander angeordnet ein Verdampfer zum Verdampfen des Arbeitsmediums, der mit Abgas der Brennkraftmaschine beaufschlagbar ist, eine Expansionsmaschine zum Entspannen des Arbeitsmediums, ein Kondensator zum Kondensieren des Arbeitsmediums sowie eine Fördereinrichtung zum Antreiben des Arbeitsmediums. Des Weiteren ist bei der bekannten Abwärmenutzungsvorrichtung ein Wärmespeicher vorgesehen, der in einen zum Verdampfer führenden Abgaspfad eingebunden ist. Mit Hilfe einer Ventileinrichtung lässt sich nun der Abgasstrom abhängig von einem die verfügbare Wärmeenergie des Abgases repräsentierenden Wert auf den Wärmespeicher und auf den Verdampfer aufteilen. Beispielsweise wird grundsätzlich der Verdampfer mit Abgas beaufschlagt. Falls mehr Abgaswärme zur Verfügung steht als für die Verdampfung erforderlich ist, kann ein Abgasteilstrom dem Wärmespeicher zugeführt werden. Steht dagegen weniger Abgaswärme zur Verfügung als für die Verdampfung erforderlich ist und liegt die Temperatur des Wärmespeichers höher als die Temperatur des Abgases, kann der Abgasstrom zunächst durch den Wärmespeicher und anschließend zum Verdampfer geführt werden. Bei der bekannten Abwärmenutzungsvorrichtung wird somit ein in die Abgasanlage der Brennkraftmaschine eingebundener Wärmespeicher bedarfsabhängig zum Vorheizen des Abgases verwendet. Gattungsgemäße Abwärmenutzungsvorrichtungen sind aus der JP 2005-016326 A und aus der DE 10 2009 035 522 A1 bekannt und zeichnen sich durch einen Wärmespeicher aus, der in den Abwärmenutzungskreis eingebunden und vom Arbeitsmedium beaufschlagbar ist. Eine andere Abwärmenutzungsvorrichtung mit Wärmespeicher ist aus der EP 2 660 432 A1 bekannt.

Die vorliegende Erfindung beschäftigt sich mit dem Problem, für eine Abwärmenutzungsvorrichtung der eingangs genannten Art eine verbesserte oder zumindest eine andere Ausführungsform anzugeben, die sich insbesondere durch einen erhöhten Gebrauchswert bzw. durch eine zusätzliche Funktionalität des Abwärmenutzungskreises auszeichnet. Zusätzlich oder alternativ soll der energetische Wirkungsgrad der mit der Abwärmenutzungsvorrichtung ausgestatteten Brennkraftmaschine erhöht werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Wärmekapazität des Abwärmenutzungskreises dem Abgasstrang zur Verfügung zu stellen, falls der Abgasstrang eine Wärmebedarfsphase besitzt, also eine Betriebsphase mit einem erhöhten Wärmebedarf besitzt. Derartige Wärmebedarfsphasen liegen zum Beispiel während einer Kaltstartphase der Brennkraftmaschine oder während Unterbrechungszeiten des Motorbetriebs, insbesondere bei Hybridanwendungen, oder bei Betriebszuständen der Brennkraftmaschine mit niedriger Motorlast oder bei einem stop-and-go-Betrieb vor. Hierzu schlägt die Erfindung vor, in den Abwärmenutzungskreis einen Wärmespeicher einzubinden, derart, dass er vom Arbeitsmedium des Abwärmenutzungskreises beaufschlagbar ist. Mit anderen Worten, der Wärmespeicher ist erfindungsgemäß unmittelbar in den Abwärmenutzungskreis integriert, wodurch die Wärmespeicherkapazität des Abwärmenutzungskreises insgesamt deutlich erhöht werden kann. Hierdurch besteht unter anderem die Möglichkeit, während eines Kaltstarts der Brennkraftmaschine Wärme des Abwärmenutzungskreises, z.B. über das Arbeitsmedium dem Verdampfer zuzuführen und über den Verdampfer auf das den Verdampfer durchströmende Abgas zu übertragen. Somit können die im Abgasstrang stromab des Verdampfers angeordneten Komponenten der Abgasanlage aufgeheizt werden, beispielsweise um während der Kaltstartphase rascher eine Betriebstemperatur zu erreichen.

Durch die Integration des Wärmespeichers in den Abwärmenutzungskreis lässt sich bei einer speziellen Ausführungsform insbesondere erreichen, dass das Abgas zu keinem Zeitpunkt sowohl den Verdampfer als auch den Wärmespeicher durchströmen muss. Hierdurch kann der Abgasgegendruck in der Abgasanlage signifikant reduziert werden, was den energetischen Wirkungsgrad der Brennkraftmaschine erhöht.

Erfindungsgemäß ist der Wärmespeicher über einen Vorlauf und einen Rücklauf an den Abwärmenutzungskreis angeschlossen. Somit ist es möglich, den Wärmespeicher abhängig von der im Arbeitsmedium zur Verfügung stehenden Wärme aufzuladen bzw. abhängig vom Wärmebedarf des Arbeitsmediums eine Beheizung des Arbeitsmediums über den Wärmespeicher durchzuführen. Zweckmäßig kann eine Vorlaufventileinrichtung zum Steuern des Vorlaufs vorgesehen sein. Zusätzlich oder alternativ kann eine Rücklaufventileinrichtung zum Steuern des Rücklaufs vorgesehen sein.

Erfindungsgemäß ist der Vorlauf zwischen dem Verdampfer und der Expansionsmaschine an den Abwärmenutzungskreis angeschlossen, so dass heißes, überhitztes, dampfförmiges Arbeitsmedium zum Aufladen des Wärmespeichers verwendet werden kann. Ferner ist erfindungsgemäß der Rücklauf zwischen der Expansionsmaschine und dem Kondensator an den Abwärmenutzungskreis angeschlossen, so dassder Wärmespeicher vollständig auf der Dampfseite des Abwärmenutzungskreises angeordnet ist, was die Integration vereinfacht.

Gemäß einer vorteilhaften Ausführungsform kann ein Kondensatorbypass zur Umgehung des Kondensators vorgesehen sein, der einerseits zwischen der Expansionsmaschine und dem Kondensator und andererseits zwischen dem Kondensator und der Fördereinrichtung an den Abwärmenutzungskreis angeschlossen ist. Über diesen Kondensatorbypass kann für den Fall, dass über den Verdampfer Wärme in das Abgas übertragen werden soll, der Kondensator umgangen werden, der innerhalb des Abwärmenutzungskreises eine Wärmesenke repräsentiert. Während dieses Betriebszustands, in dem Wärme vom Abwärmenutzungskreis auf das Abgas der Abgasanlage übertragen wird, dient der Verdampfer als Wärmesenke des Abwärmenutzungskreises. Zweckmäßig kann ein Bypassventil zum Steuern des Kondensatorbypasses vorgesehen sein. Besonders zweckmäßig ist dabei eine Ausführungsform, in welcher das Bypassventil in die zuvor genannte Rücklaufventileinrichtung integriert ist. Hierdurch ergibt sich eine besonders kompakte Bauform.

Bei einer anderen vorteilhaften Ausführungsform kann der Kondensator mit einem Kühlkreis wärmeübertragend gekoppelt sein, der außerdem mit einer Brennkraftmaschine wärmeübertragend gekoppelt ist, die das Abgas zum Beaufschlagen des Verdampfers erzeugt. In diesem Fall ist es außerdem möglich, für den Fall, dass während einer Kaltstartphase außerdem die Brennkraftmaschine rascher auf Betriebstemperatur gebracht werden soll, Wärme über den Kondensator dem Kühlkreis zuzuführen, so dass über den Kühlkreis die Brennkraftmaschine aufgewärmt werden kann.

Gemäß einer anderen vorteilhaften Ausführungsform kann ein Verdampferbypass zur abgasseitigen Umgehung des Verdampfers vorgesehen sein. Somit ist es für Betriebsphasen, in denen die Abwärmenutzungsvorrichtung nicht benötigt wird, möglich, den Abgasgegendruck durch Umgehung des Verdampfers zu reduzieren.

Bei einer anderen vorteilhaften Ausführungsform ist der Wärmespeicher als Latentwärmespeicher ausgestaltet, der mit einem Phasenwechselmaterial arbeitet. Derartige Latentwärmespeicher zeichnen sich durch eine vergleichsweise hohe Wärmespeicherkapazität aus. Durch gezielte Auswahl der Zusammensetzung des jeweiligen Phasenwechselmaterials kann eine gewünschte Phasenwechseltemperatur eingestellt werden, die sich für die jeweilige Verwendung in besonderer Weise eignet. Besonders vorteilhaft ist eine Ausführungsform, bei welcher eine Druckeinstelleinrichtung zum Einstellen des Drucks im Phasenwechselmaterial vorgesehen ist. Durch Verändern des Drucks im Phasenwechselmaterial lässt sich die Phasenwechseltemperatur variieren und somit die Speicherfähigkeit.

Bei einer anderen Ausführungsform kann eine Druckeinstelleinrichtung zum Einstellen des Drucks im Arbeitsmedium vorgesehen sein. Hierdurch ist es insbesondere möglich, für Betriebszustände, in denen der Abwärmenutzungskreis zum Aufheizen des Abgases genutzt wird, den Druck im Arbeitsmedium so einzustellen, dass für diesen Betriebszustand die Dampfphase vorübergehend eliminiert ist, so dass im gesamten Abwärmenutzungskreis nur flüssiges Arbeitsmedium zirkuliert. Hierdurch verbessert sich die Wärmeübertragung signifikant.

Bei einer anderen vorteilhaften Ausführungsform kann ein Druckspeicher vorgesehen sein, der insbesondere auch zur Bevorratung des Arbeitsmediums dienen kann. Mit Hilfe des Druckspeichers lassen sich Druckschwankungen im Arbeitsmedium besser abfangen. Der Druckspeicher kann als Dampf-Gasspeicher ausgestaltet sein und auf der Gasseite des Abwärmenutzungskreis an diesen angeschlossen sein. Ebenso kann der Druckspeicher als Flüssigkeit-Gasspeicher oder als hydropneumatischer Druckspeicher ausgestaltet sein, der zweckmäßig auf der Flüssigseite des Abwärmenutzungskreises angeordnet und daran angeschlossen ist. Zweckmäßig kann der Druckspeicher in den Wärmespeicher integriert sein.

Bei einer anderen vorteilhaften Ausführungsform kann der Wärmespeicher in den Verdampfer integriert sein. Mit anderen Worten, in diesem Fall ist der Verdampfer als Wärmespeicher ausgestaltet. Hierdurch erhält der Verdampfer eine zusätzliche Funktionalität. Gleichzeitig ergibt sich eine hohe Funktionsdichte bei kompakter Bauform. Gemäß einer besonders vorteilhaften Ausführungsform ist es hierbei möglich, den Wärmespeicher so in den Verdampfer zu integrieren, dass der Wärmespeicher direkt vom Abgas beaufschlagbar ist. Zweckmäßig sind dann innerhalb des Wärmespeichers getrennte Pfade für Abgas und Arbeitsmedium vorgesehen, die mit dem Wärmespeichermaterial des Wärmespeichers wärmeübertragend gekoppelt sind. Zweckmäßig sind Abgaspfad und Arbeitsmediumpfad jeweils mit dem Wärmespeichermedium wärmeübertragend gekoppelt. Ferner können Abgaspfad und Arbeitsmediumpfad auch miteinander wärmeübertragend gekoppelt sein.

Gemäß einer vorteilhaften Ausführungsform kann der vorstehend bereits genannte Verdampferbypass in den Verdampfer integriert sein, was die Funktionsdichte des Verdampfers zusätzlich erhöht. Der Verdampferbypass kann für den Fall, dass der Wärmespeicher in den Verdampfer integriert ist und dass der Wärmespeicher außerdem in den Abgaspfad integriert ist, insbesondere so angeordnet sein, dass er auch den Wärmespeicher abgasseitig umgeht.

Zweckmäßig kann der Verdampfer ein Gehäuse aufweisen, das einen Wärmeübertragerblock enthält. Dieser Wärmeübertragerblock kann einen Arbeitsmediumpfad und einen Abgaspfad wärmeübertragend miteinander koppeln. Innerhalb des Gehäuses ist der Verdampferbypass stromauf und stromab des Wärmeübertragerblocks an den Abgaspfad angeschlossen.

Bei in den Verdampfer integriertem Wärmespeicher kann der zuvor genannte Wärmeübertragerblock einen Verdampferabschnitt und einen Wärmespeicherabschnitt aufweisen. Im Verdampferabschnitt ist dann der Abgaspfad mit dem Arbeitsmediumpfad wärmeübertragend gekoppelt. Im Wärmespeicherabschnitt sind zweckmäßig der Abgaspfad und der Arbeitsmediumpfad mit einem Wärmespeichermaterial des Wärmespeichers wärmeübertragend gekoppelt. Der Verdampferbypass kann so angeordnet sein, dass er nur den Verdampferabschnitt umgeht oder dass er sowohl den Verdampferabschnitt als auch den Wärmespeicherabschnitt umgeht. Insbesondere kann auch eine Ventileinrichtung mit entsprechender Verschaltung ein Zuschalten und Wegschalten des Wärmespeicherabschnitts zum bzw. vom Bypass bzw. vom Abgasstrang vorgesehen sein.

Alternativ zum hier bevorzugten Latentwärmespeicher sind grundsätzlich auch andere Wärmespeicher verwendbar. Beispielsweise kann auch ein chemischer Wärmespeicher verwendet werden. Ein chemischer Wärmespeicher beruht auf dem Prinzip, eine chemische Verbindung zwischen mehreren Stoffen unter Einwirkung von Wärme aufzulösen. Während dieser endothermen Reaktion wird somit Wärme aufgenommen, also gespeichert. Bei entsprechender Auswahl der Stoffe kann diese endotherme Reaktion reversibel sein, wobei dann bei der Rückreaktion, bei welcher sich die zuvor getrennten Stoffe wieder miteinander verbinden, die zuvor eingesetzte Wärme wieder freigesetzt, also abgegeben werden kann. Diese exotherme Rückreaktion kann somit zum Bereitstellen von Wärme genutzt werden. Für die Speicherung der Wärme erfolgt zweckmäßig eine räumliche bzw. körperliche Trennung der Reagenten, also der zuvor genannten, bei der Hinreaktion voneinander getrennten Stoffe. Für die Rückreaktion werden die Stoffe bzw. die Reagenten wieder zusammengeführt.

Entsprechend einem vorteilhaften Betriebsverfahren gemäß der hier vorgestellten Erfindung kann zum Aufladen des Wärmespeichers zumindest ein Teilstrom des Arbeitsmediums durch den Wärmespeicher geführt werden. Während einer Kaltstartphase der Brennkraftmaschine kann nun dem Wärmespeicher Wärme entnommen und über den Kondensator und über den Kühlkreis der Brennkraftmaschine zugeführt werden. Zusätzlich oder alternativ kann allgemein zur Temperaturerhöhung des Abgases, also insbesondere während einer beliebigen Wärmebedarfsphase, wie z.B. während einer Kaltstartphase der Brennkraftmaschine, dem Wärmespeicher Wärme entnommen und über den Verdampfer dem Abgas zugeführt werden. Die Temperaturerhöhung des Abgases kann beispielsweise auch während eines Teillastbetriebs oder während eines stop-and-go-Betriebs der Brennkraftmaschine durchgeführt werden, falls die Abgastemperatur nicht mehr ausreicht, die Betriebstemperaturen von Abgasreinigungskomponenten bereitzustellen.

Beim erfindungsgemäßen Betriebsverfahren ist der Wärmespeicher unter Umgehung der Expansionsmaschine einerseits zwischen dem Verdampfer und der Expansionsmaschine und andererseits zwischen der Expansionsmaschine und dem Kondensator an den Abwärmenutzungskreis angeschlossen. Zur Temperaturerhöhung des Abgases kann dadurch dem Wärmespeicher Wärme entnommen und über den Verdampfer dem Abgas zugeführt werden, wobei hierzu die Förderrichtung der Fördereinrichtung umgekehrt wird. Durch diese Maßnahme ergeben sich extrem kurze Leitungslängen zwischen Wärmespeicher und Verdampfer, was die Wärmeeinleitung in das Abgas begünstigt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils eine stark vereinfachte, schaltplanartige Prinzipdarstellung einer Brennkraftmaschine mit einer Abwärmenutzungsvorrichtung bei verschiedenen Ausführungsformen,
- Fig. 3: eine stark vereinfachte schaltplanartige Prinzipdarstellung eines Verdampfers der Abwärmenutzungsvorrichtung bei einer speziellen Ausführungsform.

Die Erfindung ist ausschließlich durch die anhängenden Ansprüche definiert.

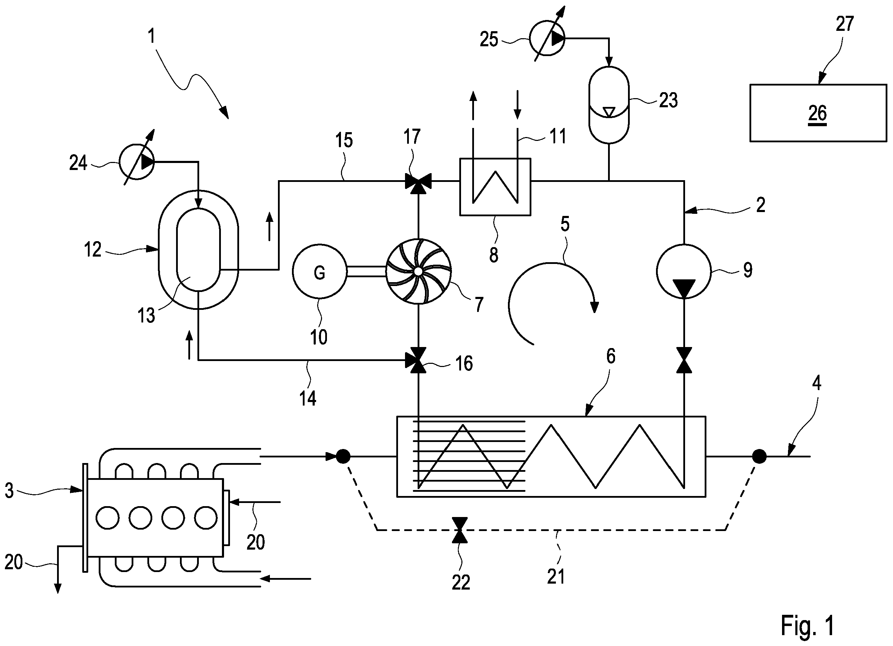

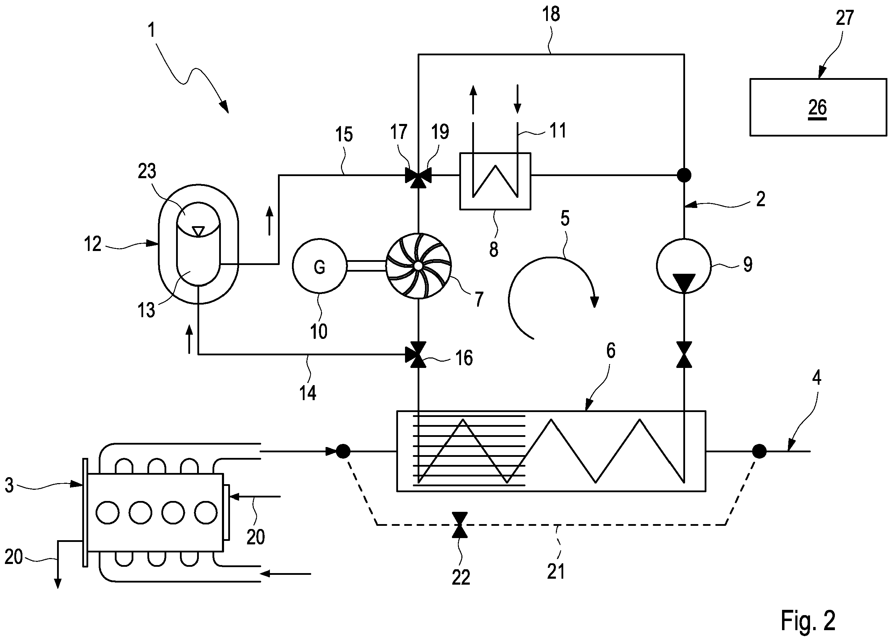

Entsprechend den Figuren 1 und 2 umfasst eine Abwärmenutzungsvorrichtung 1 einen Abwärmenutzungskreis 2, der mit einer Brennkraftmaschine 3 wärmeübertragend gekoppelt ist. Die Brennkraftmaschine 3 umfasst hierzu einen Abgasstrang 4.

Im Abwärmenutzungskreis 2 zirkuliert ein Arbeitsmedium entsprechend einem Drehrichtungspfeil 5, sofern die Abwärmenutzungsvorrichtung 1 ordnungsgemäß in Betrieb ist. Bezüglich der Strömungsrichtung des Arbeitsmediums enthält der Abwärmenutzungskreis 2 hintereinander einen Verdampfer 6, eine Expansionsmaschine 7, einen Kondensator 8 und eine Fördereinrichtung 9. Der Verdampfer 6 dient zum Verdampfen des Arbeitsmediums. Die Expansionsmaschine 7 dient zum Entspannen des Arbeitsmediums, wobei die Expansionsmaschine 7 hier beispielsweise einen Generator 10 antreibt. Der Kondensator 8 dient zum Kondensieren des Arbeitsmediums, wozu der Kondensator 8 beispielsweise an einen Kühlkreis 11 angeschlossen ist. Die Fördereinrichtung 9 dient zum Antreiben des Arbeitsmediums im Abwärmenutzungskreis 2.

Der Verdampfer 6 ist als Wärmeübertrager ausgestaltet und in den Abgasstrang 4 eingebunden, so dass der Verdampfer 6 mit Abgas der Brennkraftmaschine 3 beaufschlagbar ist.

Die Abwärmenutzungsvorrichtung 1 ist außerdem mit einem Wärmespeicher 12 ausgestattet, der in den Abwärmenutzungskreis 2 eingebunden ist, derart, dass er vom Arbeitsmedium beaufschlagbar ist. Mit anderen Worten, ein Wärmespeichermaterial 13 des Wärmespeichers 12 ist mit dem Arbeitsmedium wärmeübertragend gekoppelt, so dass Wärme zwischen dem Arbeitsmedium und dem Wärmespeichermedium 13 austauschbar ist.

Bei den Ausführungsformen der Figuren 1 und 2 ist der Wärmespeicher 12 über einen Vorlauf 14 und einen Rücklauf 15 an den Abwärmenutzungskreis 2 angeschlossen. Im Beispiel sind eine Vorlaufventileinrichtung 16 und eine Rücklaufventileinrichtung 17 vorgesehen, über welche jeweils die Durchströmung des Wärmespeichers 12 mit Arbeitsmedium steuerbar ist. Dabei steuert die Vorlaufventileinrichtung 16 den Vorlauf 14, während die Rücklaufventileinrichtung 17 den Rücklauf 15 steuert. Zweckmäßig ist der Vorlauf 14 zwischen dem Verdampfer 6 und der Expansionsmaschine 7 an den Abwärmenutzungskreis 2 angeschlossen, so dass überhitztes, dampfförmiges Arbeitsmedium zum Aufladen des Wärmespeichers 12 genutzt werden kann. Der Rücklauf 15 ist zweckmäßig zwischen der Expansionsmaschine 7 und dem Kondensator 8 an den Abwärmenutzungskreis 2 angeschlossen. Somit verbleibt der Wärmespeicher 12 auf einer Dampfseite des Abwärmenutzungskreises 2, die sich in der Strömungsrichtung des Arbeitsmediums vom Verdampfer 6 bis zum Kondensator 8 erstreckt. Im Unterschied dazu erstreckt sich eine Flüssigseite des Abwärmenutzungskreises 2 in der Strömungsrichtung des Arbeitsmediums vom Kondensator 8 bis zum Verdampfer 6.

Bei der in Figur 2 gezeigten Ausführungsform ist ein Kondensatorbypass 18 vorgesehen, der den Kondensator 8 innerhalb des Abwärmenutzungskreises 2 umgeht. Der Kondensatorbypass 18 ist hierzu zwischen der Expansionsmaschine 7 und dem Kondensator 8 einerseits und zwischen dem Kondensator 8 und der Fördereinrichtung 9 andererseits an den Abwärmenutzungskreis 2 angeschlossen. Zur Steuerung des Kondensatorbypasses 18 kann ein Bypassventil 19 vorgesehen sein, das hier in die Rücklaufventileinrichtung 17 integriert ist.

Der zur Kühlung des Kondensators 9 vorgesehene Kühlkreis 11 kann entsprechend einer vorteilhaften Ausführungsform mit der Brennkraftmaschine 3 wärmeübertragend gekoppelt sein. Insbesondere handelt es sich beim Kühlkreis 11 somit um einen Bestandteil eines hier nur teilweise dargestellten Motorkühlkreises 20.

Ferner ist bei den hier gezeigten Ausführungsformen der Figuren 1 und 2 ein Verdampferbypass 21 vorgesehen, der den Verdampfer 6 abgasseitig umgeht. Zum Steuern dieses Verdampferbypasses 21 kann ein entsprechendes Bypassventil 22 vorgesehen sein.

Die in Figur 1 gezeigte Ausführungsform der Abwärmenutzungsvorrichtung 1 ist außerdem mit einem Druckspeicher 23 ausgestattet, der an die Flüssigseite des Abwärmenutzungskreises 3 angeschlossen ist. Im Beispiel ist der Druckspeicher 23 zwischen Kondensator 8 und Fördereinrichtung 9 an den Abwärmenutzungskreis 2 angeschlossen. Insbesondere kann ein derartiger Druckspeicher 23 auch in den Wärmespeicher 12 integriert sein, was in Figur 2 angedeutet ist. In diesem Fall befindet sich der Wärmespeicher 23 auf der Dampfseite des Abwärmenutzungskreises 2.

Der Wärmespeicher 12 ist zweckmäßig als Latentwärmespeicher ausgestaltet. Das Wärmespeichermaterial 13 ist dann zweckmäßig ein Phasenwechselmaterial. In Figur 1 ist eine Druckeinstelleinrichtung 24 angedeutet, mit deren Hilfe der Druck im Phasenwechselmaterial, also im Wärmespeichermaterial 13 eingestellt werden kann. Durch Verändern des Drucks im Phasenwechselmaterial kann die Phasenwechseltemperatur variiert werden. Hierdurch lässt sich der Wärmespeicher 12 besonders einfach an die aktuelle Wärmesituation der Abwärmenutzungsvorrichtung 1 bzw. der Brennkraftmaschine 3 anpassen.

Ebenfalls in Figur 1 angedeutet ist eine (andere) Druckeinstelleinrichtung 25, mit deren Hilfe der Druck im Arbeitsmedium des Abwärmenutzungskreises 2 eingestellt werden kann. Während eines normalen Betriebs des Abwärmenutzungskreises 2 kann der Druck im Arbeitsmedium einerseits über die Fördereinrichtung 9 und andererseits über die Expansionsmaschine 7 eingestellt werden. In Sonderbetriebszuständen, wie sie beispielsweise während einer Aufwärmphase der Brennkraftmaschine 3 vorliegen, kann es zweckmäßig sein, den Druck im Arbeitsmedium zu verändern, beispielsweise um den Anteil der Dampfseite im Abwärmenutzungskreis 2 zu reduzieren. Insbesondere kann es zweckmäßig sein, die Dampfseite im Abwärmenutzungskreis 2 vorübergehend vollständig zu entfernen, um nur noch flüssiges Arbeitsmedium zu fördern, was die Wärmeübertragung zwischen Wärmespeicher 12 und Abgas erheblich verbessert.

Zum Betreiben der Abwärmenutzungsvorrichtung 1 bzw. zum Betätigen der verstellbaren und einstellbaren Komponenten der Abwärmenutzungseinrichtung 1 bzw. der Brennkraftmaschine 3 kann ferner eine Steuerung 26 vorgesehen sein. Diese Steuerung 26 kann hardwaremäßig in ein Steuergerät 27 der Brennkraftmaschine 3 integriert und/oder softwaremäßig in das Steuergerät 27 implementiert sein.

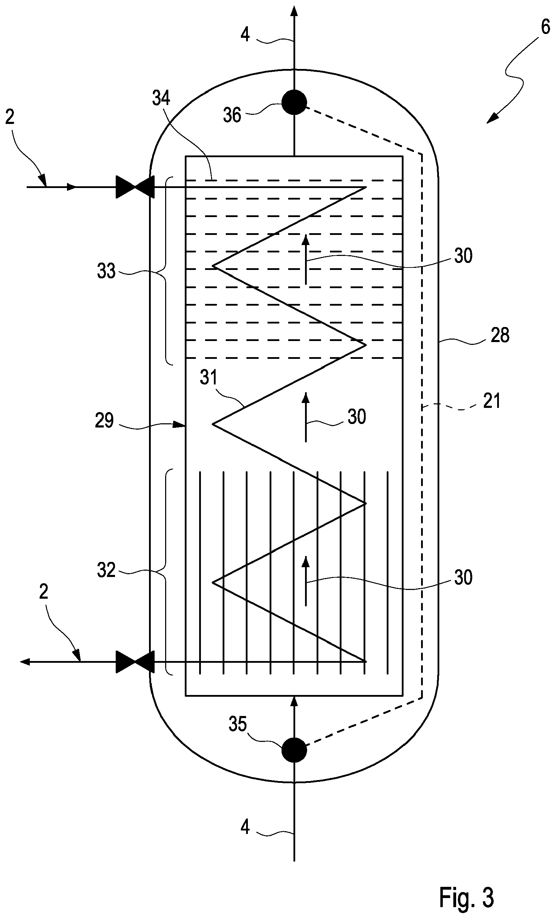

Gemäß Figur 3 kann der Verdampfer 6 gemäß einer speziellen Ausführungsform ein Gehäuse 28 aufweisen, in dem ein Wärmeübertragungsblock 29 angeordnet ist. Der Wärmeübertragungsblock 29 weist einen durch Pfeile angedeuteten Abgaspfad 30, einen Arbeitsmediumpfad 31, einen durch eine geschweifte Klammer angedeuteten Verdampferabschnitt 32 und einen ebenfalls durch eine geschweifte Klammer angedeuteten Wärmespeicherabschnitt 33 auf. Im Verdampferabschnitt 32 sind der Abgaspfad 30 und der Arbeitsmediumpfad 31 wärmeübertragend miteinander gekoppelt. Im Wärmespeicherabschnitt 33 sind der Abgaspfad 30 und der Arbeitsmediumpfad 31 mit dem Wärmespeichermaterial 13 wärmeübertragend gekoppelt, dass innerhalb des Wärmespeicherabschnitts 33 in einer Wärmespeicherstruktur 34 untergebracht ist. Zweckmäßig können Abgaspfad 30 und Arbeitsmediumpfad 31 auch innerhalb des Wärmespeicherabschnitts 33 wärmeübertragend miteinander gekoppelt sein.

Bei der in Figur 3 gezeigten Ausführungsform sind Verdampferabschnitt 32 und Wärmespeicherabschnitt 33 bezüglich einer Längsrichtung des Wärmeübertragungsblocks 29 axial zueinander benachbart. Ebenso ist eine integrierte Bauform denkbar.

Im Beispiel der Figur 3 ist in den Verdampfer 6 außerdem der zuvor genannte Verdampferbypass 21 integriert, derart, dass der Verdampferbypass 21 innerhalb des Gehäuses 28 verläuft. Der Verdampferbypass 21 ist dabei über einen ersten Anschluss 35 stromauf des Wärmeübertragungsblocks 29 an den Abgaspfad 30 angeschlossen und stromab des Wärmeübertragungsblocks 29 über einen zweiten Anschluss 36 an den Abgaspfad 30 angeschlossen. Das Bypassventil 22 zum Steuern des Verdampferbypasses 21 ist in Figur 3 nicht dargestellt, kann jedoch beispielsweise in einen der Anschlüsse 35, 36 integriert sein.

Die Steuerung 26 kann zweckmäßig so ausgestaltet bzw. programmiert sein, dass sie das nachfolgend beschriebene Verfahren zum Betreiben der Brennkraftmaschine 3 bzw. der Abwärmenutzungsvorrichtung 1 durchführen kann.

Während eines Normalbetriebs der Brennkraftmaschine 3 ist auch ein Normalbetrieb der Abwärmenutzungsvorrichtung 1 angestrebt, bei welcher im Abgas mitgeführte Abwärme im Verdampfer 6 zum Verdampfen des Arbeitsmediums verwendet wird, wobei das verdampfte Arbeitsmedium in der Expansionsmaschine 7 zum Antreiben des Generators 10 genutzt wird. Über den Kondensator 8 erfolgt dann die Kondensierung des entspannten und teilweise abgekühlten Arbeitsmediums. Die Fördereinrichtung 9 treibt das Arbeitsmedium wieder durch den Verdampfer 6. Während dieses Normalbetriebs steht somit auch Wärme zum Aufladen des Wärmespeichers 12 zur Verfügung. Dies erfolgt zweckmäßig dadurch, dass ein Teilstrom des Arbeitsmediums durch den Wärmespeicher 12 geführt wird.

Falls nun eine Temperaturerhöhung des Abgases vorgenommen werden soll, z.B. um eine stromab des Verdampfers 6 im Abgasstrang 4 angeordnete Komponente der Abgasanlage auf eine vorbestimmte Betriebstemperatur zu bringen, kann dem Wärmespeicher 12 Wärme entnommen und diese über den Verdampfer 6 dem Abgas zugeführt werden. Hierzu kann beispielsweise gemäß Figur 2 der Kondensator 8 vorübergehend über den Kondensatorbypass 18 umgangen werden, um heißes Arbeitsmedium dem Verdampfer 6 zuzuführen.

Falls jedoch entsprechend der in Figur 1 gezeigten Ausführungsform kein derartiger Kondensatorbypass 18 vorgesehen ist, kann beispielsweise der Kühlkreis 11 vorübergehend deaktiviert werden. Ebenso ist es möglich, vorübergehend die Förderrichtung der Fördereinrichtung 9 umzukehren, um so auf möglichst kurzem Weg heißes Arbeitsmedium vom Wärmespeicher 12 zum Verdampfer 6 zu fördern.

Eine derartige Temperaturerhöhung des Abgases ist insbesondere dann erwünscht, wenn die Brennkraftmaschine 3 kaltgestartet wird und dementsprechend zunächst eine Kaltstartphase durchläuft. Ein Kaltstart liegt dann vor, wenn die Brennkraftmaschine 3 im Wesentlichen Umgebungstemperatur besitzt.

Während dieser Kaltstartphase kann wie zuvor beschrieben Wärme aus dem Wärmespeicher 12 über das Arbeitsmedium zum Verdampfer 6 gefördert werden und über den Verdampfer 6 dem Abgas zugeführt werden, um die Abgasbehandlungskomponenten rascher auf Betriebstemperatur zu bringen.

Zusätzlich ist es während dieser Kaltstartphase außerdem möglich, über den Kühlkreis 11 Wärme der Brennkraftmaschine 3 zuzuführen, sofern es sich beim Kühlkreis 11 um einen Bestandteil des Motorkühlkreises 20 handelt. Falls ein Kondensatorbypass 18 vorgesehen ist, ist er für diesen Fall deaktiviert.

## Patentansprüche

1. Abwärmenutzungsvorrichtung für eine Brennkraftmaschine (3), insbesondere eines Fahrzeugs,
- mit einem Abwärmenutzungskreis (2), in dem ein Arbeitsmedium zirkuliert,
- mit einem im Abwärmenutzungskreis (2) angeordneten Verdampfer (6) zum Verdampfen des Arbeitsmediums, der mit Abgas der Brennkraftmaschine (3) beaufschlagbar ist,
- mit einer im Abwärmenutzungskreis (2) stromab des Verdampfers (6) angeordneten Expansionsmaschine (7) zum Entspannen des Arbeitsmediums,
- mit einem im Abwärmenutzungskreis (2) stromab der Expansionsmaschine (7) angeordneten Kondensator (8) zum Kondensieren des Arbeitsmediums,
- mit einer im Abwärmenutzungskreis (2) stromab des Kondensators (8) angeordneten Fördereinrichtung (9) zum Antreiben des Arbeitsmediums im Abwärmenutzungskreis (2),
- mit einem Wärmespeicher (12), der in den Abwärmenutzungskreis (2) eingebunden und vom Arbeitsmedium beaufschlagbar ist,
- wobei der Wärmespeicher (12) über einen Vorlauf (14) und einen Rücklauf (15) an den Abwärmenutzungskreis (2) angeschlossen ist,
**dadurch gekennzeichnet,**
- **dass** der Vorlauf (14) zwischen Verdampfer (6) und Expansionsmaschine (7) an den Abwärmenutzungskreis (2) angeschlossen ist, wobei der Rücklauf (15) zwischen der Expansionsmaschine (7) und Kondensator (8) an den Abwärmenutzungskreis (2) angeschlossen ist.

2. Abwärmenutzungsvorrichtung nach Anspruch 1,
**dadurch gekennzeichnet,**
**dass** eine Vorlaufventileinrichtung (16) zum Steuern des Vorlaufs (14) und/oder eine Rücklaufventileinrichtung (17) zum Steuern des Rücklaufs (15) vorgesehen ist/sind.

3. Abwärmenutzungsvorrichtung nach einem der Ansprüche 1 und 2,
**dadurch gekennzeichnet,**
**dass** ein Kondensatorbypass (18) zur Umgehung des Kondensators (8) vorgesehen ist, der einerseits zwischen der Expansionsmaschine (7) und Kondensator (8) und andererseits zwischen Kondensator (8) und Fördereinrichtung (9) an den Abwärmenutzungskreis (2) angeschlossen ist, wobei insbesondere vorgesehen sein kann, dass ein Bypassventil (19) zum Steuern des Kondensatorbypasses (18) vorgesehen ist.

4. Abwärmenutzungsvorrichtung nach einem der Ansprüche 1 bis 3,
**dadurch gekennzeichnet,**
**dass** der Kondensator (8) mit einem Kühlkreis (11) wärmeübertragend gekoppelt ist, der außerdem mit einer Brennkraftmaschine (3) wärmeübertragend gekoppelt ist, die das Abgas zum Beaufschlagen des Verdampfers (6) erzeugt.

5. Abwärmenutzungsvorrichtung nach einem der Ansprüche 1 bis 4,
**dadurch gekennzeichnet,**
**dass** ein Verdampferbypass (21) zur abgasseitigen Umgehung des Verdampfers (6) vorgesehen ist.

6. Abwärmenutzungsvorrichtung nach Anspruch 5,
**dadurch gekennzeichnet,**
**dass** ein Bypassventil (22) zum Steuern des Verdampferbypasses (21) vorgesehen ist.

7. Abwärmenutzungsvorrichtung nach einem der Ansprüche 1 bis 6,
**dadurch gekennzeichnet,**
- **dass** der Wärmespeicher (12) als Latentwärmespeicher ausgestaltet ist, der mit einem Phasenwechselmaterial arbeitet, und/oder
- **dass** eine Druckeinstelleinrichtung (24) zum Einstellen des Drucks im Phasenwechselmaterial vorgesehen ist, und/oder
- **dass** eine Druckeinstelleinrichtung (25) zum Einstellen des Drucks im Arbeitsmedium vorgesehen ist.

8. Abwärmenutzungsvorrichtung nach einem der Ansprüche 1 und 3 bis 7,
**dadurch gekennzeichnet,**
**dass** der Wärmespeicher (12) in den Verdampfer (6) integriert ist.

9. Abwärmenutzungsvorrichtung nach den Ansprüchen 5 und 8,
**dadurch gekennzeichnet,**
**dass** der Verdampferbypass (21) in den Verdampfer (6) integriert ist.

10. Abwärmenutzungsvorrichtung nach Anspruch 8 oder 9,
**dadurch gekennzeichnet,**
**dass** der Verdampfer (6) einen Wärmeübertragungsblock (29) aufweist, der einen Abgaspfad (30), einen Arbeitsmediumpfad (31), einen Verdampferabschnitt (32) und einen Wärmespeicherabschnitt (33) aufweist, wobei im Verdampferabschnitt (32) der Abgaspfad (30) und der Arbeitsmediumpfad (31) wärmeübertragend gekoppelt sind, während im Wärmespeicherabschnitt (33) der Abgaspfad (30) und der Arbeitsmediumpfad (31) mit dem Wärmespeichermaterial (13) des Wärmespeichers (12) wärmeübertragend gekoppelt sind.

11. Verfahren zum Betreiben einer Brennkraftmaschine (3), insbesondere eines Kraftfahrzeugs, die mit einer Abwärmenutzungsvorrichtung (1) ausgestattet ist, wobei die Abwärmenutzungsvorrichtung (1) aufweist:
- einen Abwärmenutzungskreis (2), in dem ein Arbeitsmedium zirkuliert,
- einen im Abwärmenutzungskreis (2) angeordneten Verdampfer (6) zum Verdampfen des Arbeitsmediums, der mit Abgas der Brennkraftmaschine (3) beaufschlagbar ist,
- eine im Abwärmenutzungskreis (2) stromab des Verdampfers (6) angeordnete Expansionsmaschine (7) zum Entspannen des Arbeitsmediums,
- einen im Abwärmenutzungskreis (2) stromab der Expansionsmaschine (7) angeordneten Kondensator (8) zum Kondensieren des Arbeitsmediums,
- eine im Abwärmenutzungskreis (2) stromab des Kondensators (8) angeordnete Fördereinrichtung (9) zum Antreiben des Arbeitsmediums im Abwärmenutzungskreis (2),
- einen Wärmespeicher (12), der in den Abwärmenutzungskreis (2) eingebunden und vom Arbeitsmedium beaufschlagbar ist,
wobei bei dem Verfahren zum Aufladen des Wärmespeichers (12) zumindest ein Teilstrom des Arbeitsmediums durch den Wärmespeicher (12) geführt wird, **dadurch gekennzeichnet,**
**dass** der Wärmespeicher (12) unter Umgehung der Expansionsmaschine (7) einerseits zwischen Verdampfer (6) und Expansionsmaschine (7) und andererseits zwischen Expansionsmaschine (7) und Kondensator (8) an den Abwärmenutzungskreis (2) angeschlossen ist, bei dem zur Temperaturerhöhung des Abgases dem Wärmespeicher (12) Wärme entnommen und über den Verdampfer (6) dem Abgas zugeführt wird, wobei hierzu die Förderrichtung der Fördereinrichtung (9) umgekehrt wird.

12. Verfahren nach Anspruch 11, bei dem während einer Kaltstartphase der Brennkraftmaschine (3) dem Wärmespeicher (12) Wärme entnommen und über den Kondensator (8) und über den Kühlkreis (11) der Brennkraftmaschine (3) zugeführt wird.

13. Verfahren nach Anspruch 11 oder 12, bei dem zur Temperaturerhöhung des Abgases dem Wärmespeicher (12) Wärme entnommen und über den Verdampfer (6) dem Abgas zugeführt wird.

## Claims

1. An exhaust gas heat utilisation device for a combustion engine (3), in particular of a vehicle,
- with an exhaust heat utilisation circuit (2), in which a working medium circulates,
- with an evaporator (6) arranged in the exhaust heat utilisation circuit (2) for evaporating the working medium, which can be supplied with exhaust gas of the combustion engine (3),
- with an expansion machine (7) arranged in the exhaust heat utilisation circuit (2) downstream of the evaporator (6) for expanding the working medium,
- with a condenser (8) arranged in the exhaust heat utilisation circuit (2) downstream of the expansion machine (7) for condensing the working medium,
- with a delivery device (9) arranged in the exhaust heat utilisation circuit (2) downstream of the condenser (8) for driving the working medium in the exhaust heat utilisation circuit (2),
- with a heat storage unit (12) incorporated in the exhaust heat utilisation circuit (2), which can be supplied with the working medium,
- wherein the heat storage unit (12) is connected to the exhaust heat utilisation circuit (2) via an advance (14) and a return (15),
**characterized in**
**that** the advance (14) is connected to the exhaust heat utilisation circuit (2) between evaporator (6) and expansion machine (7), wherein the return (15) is connected to the exhaust heat utilisation circuit (2) between the expansion machine (7) and condenser (8).

2. The exhaust heat utilisation device according to Claim 1, **characterized in that**, an advance valve device (16) for controlling the advance (14) and/or a return valve device (17), for controlling the return (15), is/are provided.

3. The exhaust heat utilisation device according to any one of the Claims 1 and 2, **characterized in that** a condenser bypass (18) for bypassing the condenser (8) is provided, which on the one hand is connected to the exhaust heat utilisation circuit (2) between the expansion machine (7) and condenser (8) and on the other hand between condenser (8) and delivery device (9), wherein it can be provided in particular that a bypass valve (19) for controlling the condenser bypass (18) is provided.

4. The exhaust heat utilisation device according to any one of the Claims 1 to 3, **characterized in that** the condenser (8) is coupled to a cooling circuit (11) in a heat-transferring manner, which is additionally coupled to a combustion engine (3) in a heat-transferring manner, which generates the exhaust gas for supplying the evaporator (6).

5. The heat utilisation device according to any one of the Claims 1 to 4, **characterized in that** an evaporator bypass (21) for the bypassing of the evaporator (6) on the exhaust gas side is provided.

6. The heat utilisation device according to Claim 5,
**characterized in that** a bypass valve (22) for controlling the evaporator bypass (21) is provided.

7. The exhaust heat utilisation device according to any one of the Claims 1 to 6, **characterized**
- **in that** the heat storage unit (12) is configured as latent heat storage unit, which operates with a phase change material, and/or
- **in that** a pressure adjusting device (24) for adjusting the pressure in the phase change material is provided, and/or
- **in that** a pressure adjusting device (25) for adjusting the pressure in the working medium is provided.

8. The exhaust heat utilisation device according to any one of the Claims 1 and 4-7, **characterized in that** the heat storage unit (12) is integrated in the evaporator (6).

9. The exhaust heat utilisation device according the Claims 6 and 8, **characterized in that** the evaporator bypass (21) is integrated in the evaporator (6).

10. The exhaust heat utilisation device according to Claim 8 or 9, **characterized in that** the evaporator (6) comprises a heat transfer block (29) which comprises an exhaust path (30), a working medium path (31), an evaporator section (32) and a heat storage section (33), wherein in the evaporator section (32) the exhaust path (30) and the working medium path (31) are coupled to each other in a heat-transferring manner, while in the heat storage section (33) the exhaust gas path (30) and the working medium path (31) are coupled to the heat storage material (13) of the heat storage unit (12) in a heat-transferring manner.

11. A method for operating a combustion engine (3), in particular of a motor vehicle, which is equipped with a exhaust heat utilisation device (1), wherein the exhaust gas heat utilisation device (1) comprises:
- an exhaust heat utilisation circuit (2), in which a working medium circulates,
- an evaporator (6) arranged in the exhaust heat utilisation circuit (2) for evaporating the working medium, which can be supplied with exhaust gas of the combustion engine (3),
- an expansion machine (7) arranged in the exhaust heat utilisation circuit (2) downstream of the evaporator (6) for expanding the working medium,
- a condenser (8) arranged in the exhaust heat utilisation circuit (2) downstream of the expansion machine (7) for condensing the working medium,
- a delivery device (9) arranged in the exhaust heat utilisation circuit (2) downstream of the condenser (8) for driving the working medium in the exhaust heat utilisation circuit (2),
- a heat storage unit (12) incorporated in the exhaust heat utilisation circuit (2), which can be supplied with the working medium,
- the heat storage unit (12) is connected to the exhaust heat utilisation circuit (2) via an advance (14) and a return (15),
wherein in the method for charging the heat storage unit (12) at least one part flow of the working medium is conducted through the heat storage unit (12), **characterized in that** the heat storage unit (12) subject to bypassing the expansion machine (7) on the one hand is connected to the exhaust heat utilisation circuit (2) between evaporator (6) and expansion machine (7) and on the other hand between expansion machine (7) and condenser (8), wherein for increasing the temperature of the exhaust gas heat is taken from the heat storage unit (12) and fed to the exhaust via the evaporator (6), wherein for this purpose the delivery direction of the delivery device (9) is reversed.

12. The method according to Claim 11, wherein during a cold starting phase of the combustion engine (3) heat is taken from the heat storage unit (12) and fed to the combustion engine (3) via the condenser (8) and via the cooling circuit (11).

13. The method according to Claim 11 or 12, wherein for increasing the temperature of the exhaust gas heat is taken from the heat storage unit (12) and fed to the exhaust gas via the evaporator (6).

## Revendications

1. Unité de récupération de chaleur pour un moteur à combustion interne (3), en particulier d'un véhicule,
- avec un circuit de récupération de chaleur (2), dans lequel un milieu de travail circule,
- avec un évaporateur (6) disposé dans le circuit de récupération de chaleur (2), servant à évaporer le milieu de travail, qui peut être soumis à l'action des gaz d'échappement du moteur à combustion interne (3),
- avec une machine d'expansion (7) disposée dans le circuit de récupération de chaleur (2) en aval de l'évaporateur (6), servant à détendre le milieu de travail,
- avec un condensateur (8) disposé dans le circuit de récupération de chaleur (2) en aval de la machine d'expansion (7), servant à condenser le milieu de travail,
- avec un système de refoulement (9) disposé dans le circuit de récupération de chaleur (2) en aval du condensateur (8), servant à entraîner le milieu de travail dans le circuit de récupération de chaleur (2),
- avec un accumulateur de chaleur (12), qui est incorporé dans le circuit de récupération de chaleur (2) et qui peut être soumis à l'action du milieu de travail,
- dans laquelle l'accumulateur de chaleur (12) est raccordé au circuit de récupération de chaleur (2) par l'intermédiaire d'un conduit d'arrivée (14) et d'un conduit de retour (15),
**caractérisée en ce**
- **que** le conduit d'arrivée (14) est raccordé au circuit de récupération de chaleur (2) entre l'évaporateur (6) et la machine d'expansion (7), dans laquelle le conduit de retour (15) est raccordé au circuit de récupération de chaleur (2) entre la machine d'expansion (7) et le condensateur (8).

2. Unité de récupération de chaleur selon la revendication 1,
**caractérisée en ce**
**qu'**un système de soupape d'arrivée (16) est prévu pour commander le conduit d'arrivée (14) et/ou un système de soupape de retour (17) est prévu pour commander le conduit de retour (15).

3. Unité de récupération de chaleur selon l'une quelconque des revendications 1 et 2,
**caractérisée en ce**
**qu'**une dérivation de condensateur (18) est prévue pour contourner le condensateur (8), laquelle est raccordée au circuit de récupération de chaleur (2) d'une part entre la machine d'expansion (7) et le condensateur (8) et d'autre part entre le condensateur (8) et le système de refoulement (9), dans laquelle il peut être prévu en particulier qu'une soupape de dérivation (19) soit prévue pour commander la dérivation de condensateur (18).

4. Unité de récupération de chaleur selon l'une quelconque des revendications 1 à 3,
**caractérisée en ce**
**que** le condensateur (8) est couplé avec transfert de chaleur à un circuit de refroidissement (11), qui par ailleurs est couplé avec transfert de chaleur au moteur à combustion interne (3), qui produit les gaz d'échappement exerçant une action sur l'évaporateur (6).

5. Unité de récupération de chaleur selon l'une quelconque des revendications 1 à 4,
**caractérisée en ce**
**qu'**une dérivation d'évaporateur (21) est prévue pour contourner côté gaz d'échappement l'évaporateur (6).

6. Unité de récupération de chaleur selon la revendication 5,
**caractérisée en ce**
**qu'**une soupape de dérivation (22) est prévue pour commander la dérivation d'évaporateur (21).

7. Unité de récupération de chaleur selon l'une quelconque des revendications 1 à 6, **caractérisée en ce**
- **que** l'accumulateur de chaleur (12) est configuré sous la forme d'un accumulateur de chaleur latente, qui fonctionne avec un matériau à changement de phase, et/ou
- **qu'**un système de réglage de pression (24) est prévu pour régler la pression dans le matériau à changement de phase, et/ou
- **qu'**un système de réglage de pression (25) est prévu pour régler la pression dans le milieu de travail.

8. Unité de récupération de chaleur selon l'une quelconque des revendications 1 et 3 à 7,
**caractérisée en ce**
**que** l'accumulateur de chaleur (12) est intégré dans l'évaporateur (6).

9. Unité de récupération de chaleur selon les revendications 5 et 8,
**caractérisée en ce**
**que** la dérivation d'évaporateur (21) est intégrée dans l'évaporateur (6).

10. Unité de récupération de chaleur selon la revendication 8 ou 9,
**caractérisée en ce**
**que** l'évaporateur (6) présente un bloc de transfert de chaleur (29), qui présente un chemin de gaz d'échappement (30), un chemin de milieu de travail (31), une section d'évaporateur (32) et une section d'accumulateur de chaleur (33), dans laquelle le chemin de gaz d'échappement (30) et le chemin de milieu de travail (31) sont couplés avec transfert de chaleur dans la section d'évaporateur (32), tandis que le chemin de gaz d'échappement (30) et le chemin de milieu de travail (31) sont couplés avec transfert de chaleur au matériau d'accumulateur de chaleur (13) de l'accumulateur de chaleur (12) dans la section d'accumulateur de chaleur (33).

11. Procédé servant à faire fonctionner un moteur à combustion interne (3), en particulier d'un véhicule automobile, qui est équipé d'une unité de récupération de chaleur (1), dans lequel l'unité de récupération de chaleur (1) présente :
- un circuit de récupération de chaleur (2), dans lequel un milieu de travail circule,
- un évaporateur (6) disposé dans le circuit de récupération de chaleur (2), servant à évaporer le milieu de travail, qui peut être soumis à l'action des gaz d'échappement du moteur à combustion interne (3),
- une machine d'expansion (7) disposée dans le circuit de récupération de chaleur (2) en aval de l'évaporateur (6), servant à détendre le milieu de travail,
- un condensateur (8) disposé dans le circuit de récupération de chaleur (2) en aval de la machine d'expansion (7), servant à condenser le milieu de travail,
- un système de refoulement (9) disposé dans le circuit de récupération de chaleur (2) en aval du condensateur (8), servant à entraîner le milieu de travail dans le circuit de récupération de chaleur (2),
- un accumulateur de chaleur (12), qui est incorporé dans le circuit de récupération de chaleur (2) et qui peut être soumis à l'action du milieu de travail,
dans lequel au moins un flux partiel du milieu de travail est guidé à travers l'accumulateur de chaleur (12) dans le procédé servant à recharger l'accumulateur de chaleur (12),
**caractérisé en ce**
**que** l'accumulateur de chaleur (12) est raccordé au circuit de récupération de chaleur (2) en contournant la machine d'expansion (7) d'une part entre l'évaporateur (6) et la machine d'expansion (7) et d'autre part entre la machine d'expansion (7) et le condensateur (8), dans lequel circuit de récupération de chaleur de la chaleur est prélevée de l'accumulateur de chaleur (12) aux fins de l'élévation de température des gaz d'échappement et est amenée aux gaz d'échappement par l'intermédiaire de l'évaporateur (6), dans lequel la direction de refoulement du système de refoulement (9) est inversée à cet effet.

12. Procédé selon la revendication 11, où de la chaleur est prélevée de l'accumulateur de chaleur (12) au cours d'une phase de démarrage à froid du moteur à combustion interne (3) et est amenée au moteur à combustion interne (3) par l'intermédiaire du condensateur (8) et par l'intermédiaire du circuit de refroidissement (11).

13. Procédé selon la revendication 11 ou 12, où de la chaleur est prélevée de l'accumulateur de chaleur (12) aux fins de l'élévation de température des gaz d'échappement et est amenée aux gaz d'échappement par l'intermédiaire de l'évaporateur (6).
